# EUROPEAN PATENT SPECIFICATION

(11) **EP 2 014 942 B1**
(45) Date of publication and mention of the grant of the patent: **12.10.2011**
(21) Application number: 08156552.5
(22) Date of filing: 20.05.2008
(51) Int. Cl.: F16D 3/227

(54) **Self-retained constant velocity joint**
Selbsthaltendes Gleichlaufgelenk
Joint de vitesse constante retenu automatiquement

(30) Priority: 10.07.2007 US 827122
(43) Date of publication of application: 14.01.2009
(73) Proprietor: GM Global Technology Operations LLC, Detroit, MI 48265-3000 (US)
(72) Inventor: Mondragon-Parra, Eduardo, Saginaw, MI 48609 (US); Kozlowski, Keith Allen, Saginaw, MI 48603 (US)
(74) Representative: Manitz, Finsterwald & Partner GbR

(56) References cited:
- DE-A1-102004 062 843
- US-A- 3 218 827
- US-A1- 2003 114 230
- US-A1- 2005 124 422

## Description

### TECHNICAL FIELD

The present invention relates to a constant velocity joint according to the preamble of claim 1.

### BACKGROUND OF THE INVENTION

A stroking ball-type constant velocity joint facilitates rotational movement between a driving shaft and a driven shaft. The stroking ball-type joint is especially useful in applications wherein the driving and driven shafts are angled with respect to one another. The stroking ball-type joint includes an inner race attached to one of the shafts and an outer race attached to the other shaft. The inner and outer races define grooves or channels which cooperate to form passages. Roller balls are positioned in the passages and torque is transmitted between the shafts with the roller balls.

Stroking ball-type joints can include six-balls or eight-balls. Generally, six-ball stroking ball-type joints provide greater stroke and angle capabilities than eight-ball joints. On the other hand, eight-ball joints generally can be more compact than six-ball joints. It is desirable to develop a stroking ball-type joint having the advantage of compactness provided by eight-ball joints with the stroke and angle capabilities of six-ball joints, while at the same time improving NVH (Noise Vibration and Harshness) characteristics and mechanical efficiency. Yet further, it would be desirable to develop self-retained joints wherein at least a portion of the joint has the ability to hold itself together prior to full assembly in any environmental application.
US 3,218,827 discloses a constant velocity joint according to the preamble of claim 1.
It is an objective of the invention to describe an improved self-retained constant velocity joint.

### SUMMARY OF THE INVENTION

The objective is solved by a self-retained constant velocity joint according to claim 1. Preferred embodiments of the invention are mentioned in the dependent claims.

Objects, features and advantages of the present invention include a ball-type constant velocity joint that is compact in design while having large angles of magnitude, has telescoping capability and is self retained. Other advantages include a robust, light weight, design requiring little or no maintenance and in service has a long and useful life.

### BRIEF DESCRIPTION OF THE DRAWINGS

Other advantages of the present invention will be readily appreciated as the same becomes better understood by reference to the following detailed description when considered in connection with the accompanying drawings wherein:

Figure 1 is an exploded perspective view of a self-retained constant velocity joint embodying the present invention;

Figure 2 is a perspective view of the self-retained constant velocity joint with an outer race segmented to show internal detail;

Figure 3 is a front view of the self-retained constant velocity joint;

Figure 4 is a cross section of the self-retained constant velocity joint taken along line 4-4 of Figure 3 and illustrated in an axial co-extending state and telescopically retracted position;

Figure 5 is a cross section of the self-retained constant velocity joint similar in perspective to Figure 4 except illustrated in a telescopically extended position;

Figure 6 is a cross section of the self-retained constant velocity joint similar in perspective to Figure 5 except illustrated in an angled state while generally in the telescopically extended position;

Figure 7 is a front view of an inner race of the self-retained constant velocity joint;

Figure 8 is a plan view of an outer surface of the inner race viewed along line 8-8 of Figure 7;

Figure 9 is a front view of the outer race;

Figure 10 is a plan view of an inner surface of the outer race viewed along line 10-10 of Figure 9;

Figure 11 is a cross section of a cage of the self-retained constant velocity joint taken along an imaginary plane co-extending with a rotation axis of the cage;

Figure 12 is a partial side view of the cage illustrating a long window; and

Figure 13 is a partial side view of the cage illustrating a short window.

### DESCRIPTION OF THE PREFERRED EMBODIMENT

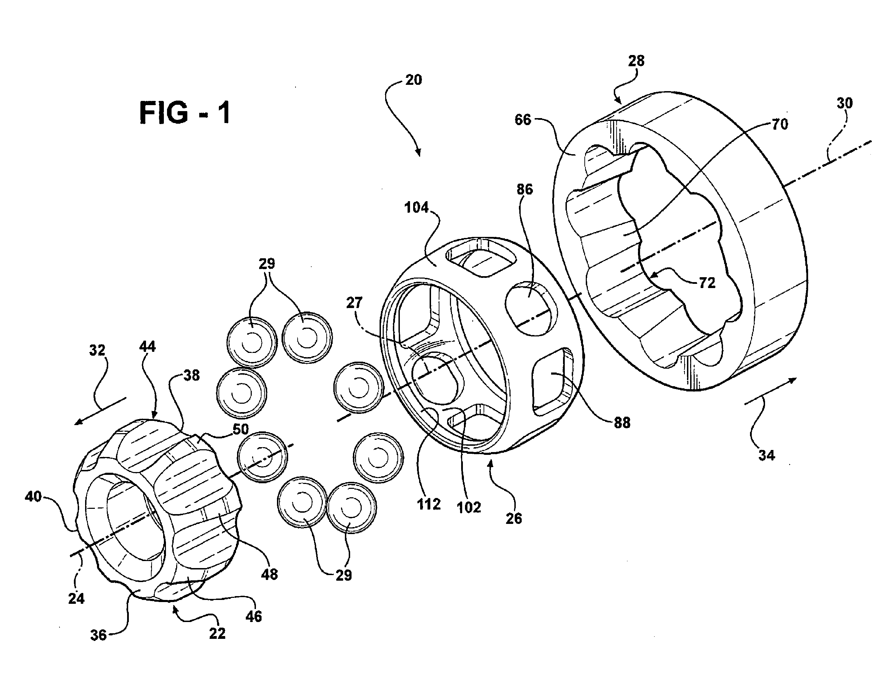

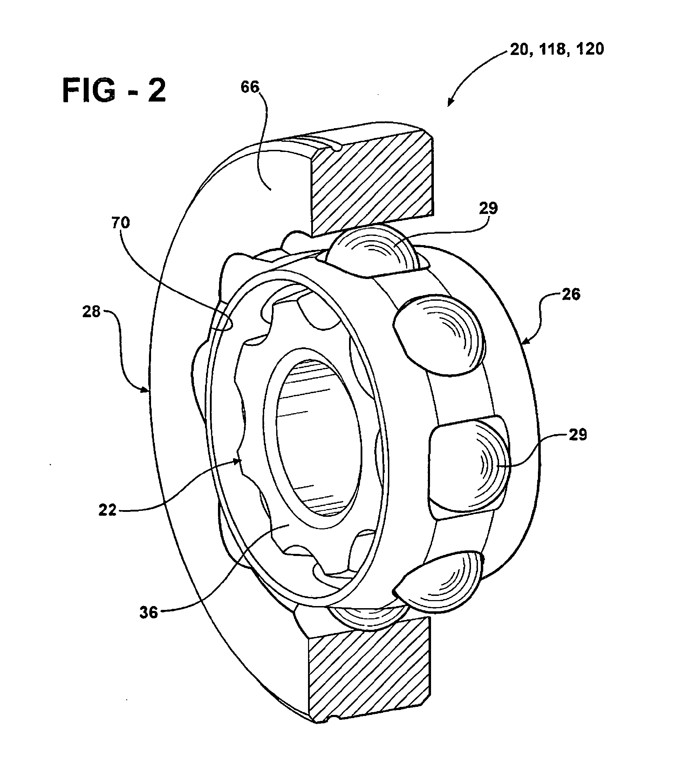

As illustrated in Figures 1-3 and 6, the present invention is a self-retained constant velocity joint 20 preferably of a stroking ball-type. The joint 20 has an inner race 22 connected rigidly and disposed concentrically to an end of a first shaft (not shown) that rotates about a first axis 24. The inner race 22 is generally surrounded circumferentially by a cage 26 that rotates about a second axis 27, and the cage 26 is surrounded circumferentially by an outer race 28. The outer race 28 is connected rigidly to a second shaft (not shown) that rotates about a third axis 30. Preferably, eight balls 29 are located radially between the inner and outer races 22, 28 and spaced circumferentially from one another with respect to axes 24, 30.

For the sake of explanation and with respect to the figures, a forward direction is illustrated by arrow 32 and a rearward direction is illustrated by arrow 34 (as best shown in Figure 1). Referring to Figures 1, 4, 6 and 7, the inner race 22 preferably has an annular forward wall 36 and an opposite annular rearward wall 38 each having a generally circular and radially outward perimeter 40 having a diameter 42.

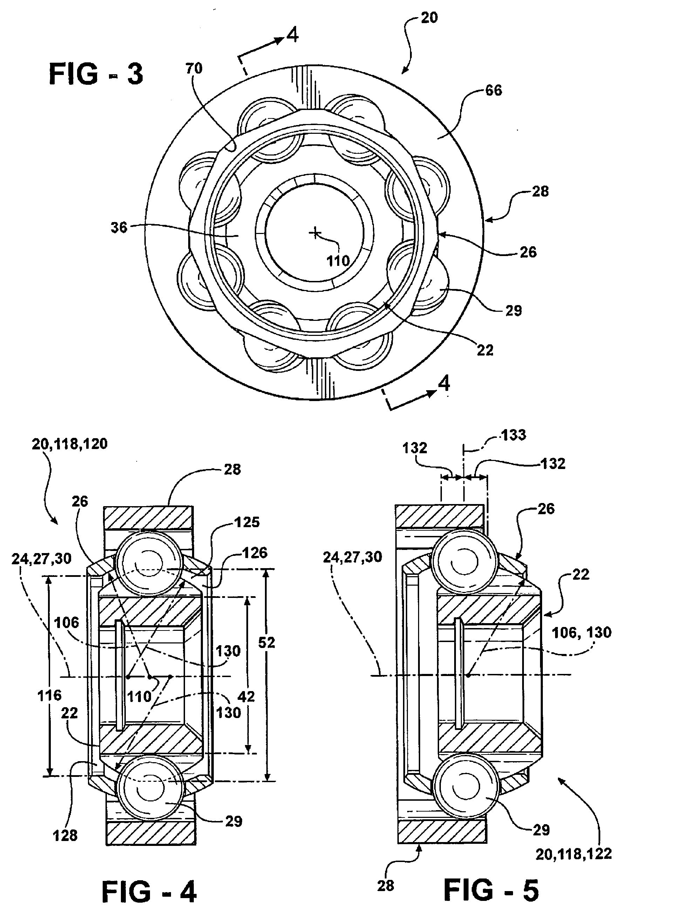

A circumferentially extending outward surface 44 of the inner race 22 spans contiguously from and axially (with respect to axis 24) between the outward perimeters 40 of the forward and rearward walls 36, 38. The outward surface 44 has a forward portion 46, an apex portion 48 and a rearward portion 50 that all extend circumferentially with respect to axis 24, and with the apex portion 48 being located axially directly between the forward and rearward portions 46, 50. The forward portion 46 spans axially and contiguously rearward from the forward perimeter 40, and diverges radially outward to the apex portion 48. The generally cylindrical apex portion 48 thus has a diameter 52 that is greater than the diameter 42 of the forward and rearward perimeters 40 (as best shown in Figure 4). Similarly, the rearward portion 50 spans axially and contiguously forward from the rearward perimeter 40 of the rearward wall 38, and diverges radially outward to the apex portion 48. Generally, a cross section of inner race 22 taken through an imaginary plane co-extending with axis 24 illustrates a convex profile of the outward surface 44. Thus, the diameter 42 of the perimeter 40 may be considered as the minimum diameter of the outward surface 44 and the diameter 52 of the apex portion 48 may be the maximum diameter of the surface 44.

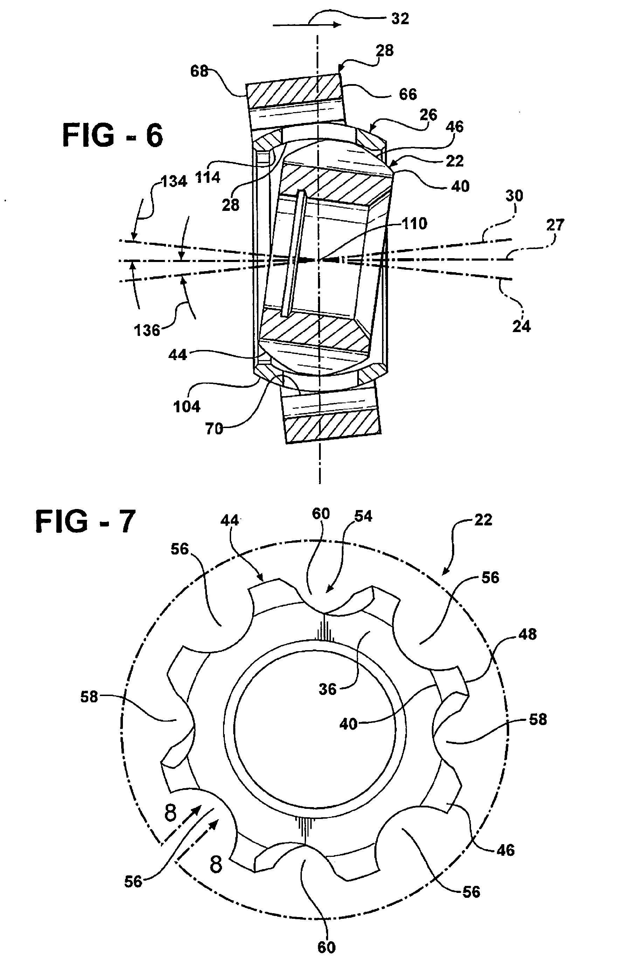

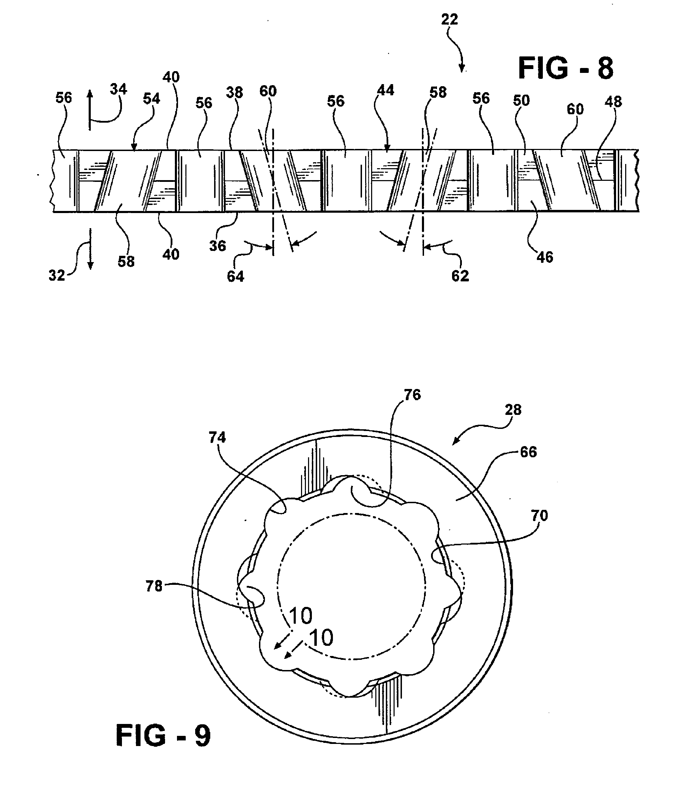

Referring to Figures 7 and 8, the inner race 22 preferably has eight or a series of grooves 54 that longitudinally extend axially with respect to axis 24 and communicate radially outward through the outward surface 44. For compact construction of the joint 20, each one of the series of grooves 54 also communicate through the forward and rearward perimeters 40, thus generally making the perimeters circumferentially discontinuous. Each groove of the series of grooves 54 is spaced circumferentially from the next adjacent one of the series of grooves 54. Preferably, the series of grooves 54 have four longitudinal grooves 56 that extend parallel to axis 24, two helical clockwise grooves 58 that slightly spiral or angle in a clockwise direction as the grooves 58 longitudinally extend axially rearward (i.e. rearward direction/arrow 34), and two helical counter-clockwise grooves 60 that slightly spiral or angle in a counter-clockwise direction as the grooves 60 longitudinally extend axially rearward. The spiraling affect of the grooves 58, 60 may not be truly helical in shape, and instead may be simply angled with respect to the longitudinal grooves 56 and as best illustrated in Figure 8.

Each longitudinal groove 56 is circumferentially adjacent to a clockwise groove 58 on one side and a counter-clockwise groove 60 on the opposite side. Moreover, each helical or angled groove 58, 60 is located circumferentially between two longitudinal grooves 56 of the series of grooves 54. The longitudinal grooves 56 are preferably spaced angularly by about ninety degrees from one another. As best illustrated in Figure 8, each angled groove 58, 60 is inclined with respect to the adjacent longitudinal grooves 56 by respective positive and negative angles represented by arrows 62, 64. The absolute magnitude of the angles or arrows 62, 64 are about or preferably are equal to one another.

Referring to Figures 1 and 9-10, the outer race 28 has an annular forward wall 66 and an opposite annular rearward wall 68, both disposed substantially perpendicular to axis 30. A circumferentially extending inner surface 70 of the outer race 28 spans laterally in an axial direction (with respect to axis 30) between the forward and rearward walls 66, 68. The outer race 28 preferably has eight channels or grooves 72 that longitudinally extend axially with respect to axis 30 and communicate laterally inward (i.e. radially inward with respect to axis 30) through the inner surface 70. Each channel of the series of channels 72 is associated with a respective one of the series of grooves 54, and is thus spaced circumferentially from the next adjacent one of the series of channels 72.

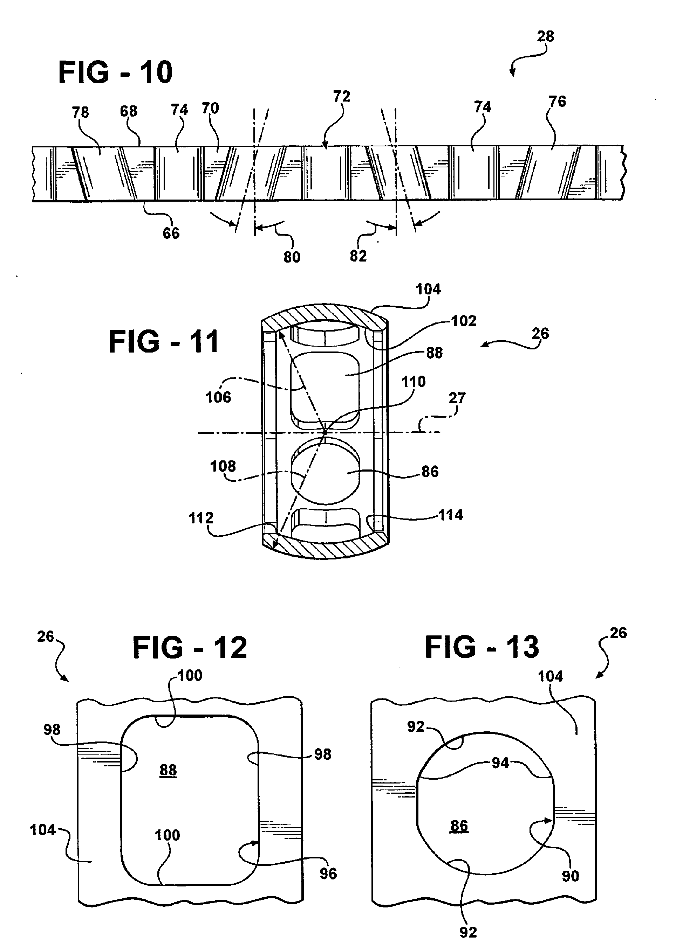

Preferably, the series of channels 72 have four longitudinal channels 74 that extend parallel to axis 30, two helical clockwise channels 76 that slightly spiral or angle in a clockwise direction as the channels 76 longitudinally extend axially rearward (i.e. rearward direction/arrow 34), and two helical counter-clockwise channels 78 that slightly spiral or angle in a counter-clockwise direction as the channels 78 longitudinally extend axially rearward. The spiraling affect of the channels 76, 78 may not be truly helical in shape, and instead may be simply angled with respect to the longitudinal grooves 58 and as best illustrated in Figure 10.

Each longitudinal channel 74 is circumferentially adjacent to a clockwise channel 76 on one side and a counter-clockwise channel 78 on the opposite side. Moreover, each helical or angled channel 76, 78 is located circumferentially between two longitudinal channels 74 of the series of channels 72. The longitudinal channels 74 are preferably spaced angularly by about ninety degrees from one another. As best illustrated in Figure 10, each angled channel 76, 78 is inclined with respect to the adjacent longitudinal channels 74 by respective positive and negative angles 80, 82. Preferably, absolute magnitude of the angles 80, 82 are equal to one another and equal to the absolute magnitude of angles 62, 64.

When the joint 20 is assembled, each one of the longitudinal grooves 56 of the inner race 22 is circumferentially aligned to a respective one of the longitudinal channels 74 of the outer race 28, thereby forming a passage for travel of a respective one of the balls 29. Similarly, each one of the clockwise grooves 58 is aligned circumferentially to a respective one of the counter-clockwise channels 78, and each one of the counter-clockwise grooves 60 is aligned circumferentially to a respective one of the clockwise channels 76 all respectively forming passages for travel of respective balls 29.

The inclined or cross groove passages create a constant velocity plane when the joint 20 is angled. The degree of incline of clockwise and counter-clockwise grooves can be smaller than that of a standard 6-ball joint design. The straight or longitudinal passages and cross grooved passages cooperate to allow a greater stroke than a joint that has inclined grooves. In addition, reduction of the helix angle of the helical grooves decreases the contact stresses in the grooves/channels and the forces transmitted to the cage 26 disposed between the inner and outer races 22, 28. Cross groove passages are discussed in greater detail in U.S. Patent No. 6,468,164.

Referring to Figures 1-6 and 11-13, the cage 26 of the joint 20 preferably has four short windows 86 and four long windows 88. All of the windows 86, 88 are elongated circumferentially with respect to axis 27 and communicate radially through the cage 26. Each one of the short windows 86 is associated with (i.e. adjacent to) a respective one of the longitudinal grooves 56 and each one of the long windows 88 is associated with a respective one of the helical or angled grooves 58, 60 in the inner race 22. Preferably, the width of the short and long windows 86, 88 are about the same, and are slightly greater than the diameter of the balls 29 for minimizing internal friction of the joint 20. One skilled in the art, however, would now know that if the diameter of the ball 29 is greater than the width of the windows 86, 88, the cage 26 may generally lock or trap the balls 29 to the inner race 22. This alternative embodiment, however, would preferably have a frictionless or friction reducing interface between the balls 29 and the cage 26 for smooth operation of the joint 20.

The short windows 86 are defined by a continuous wall 90 having opposing side segments 92 and flanking or opposing end segments 94. The side segments 92 are substantially parallel to one another, extend circumferentially with respect to axis 27, and define the width of the window 86. The opposing end segments 94 preferably have a radius of curvature equal to about half the width of window 86. Similarly, the long windows 88 are defined by a continuous wall 96 having opposing side segments 98 and flanking or opposing end segments 100. The side segments 98 are substantially parallel to one another, extend circumferentially with respect to axis 27, and define the width of the window 88. The opposing end segments 100 preferably have a radius of curvature that when doubled is substantially less than the width of window 88. Preferably, the width of window 88 is about equal to four time the radius of curvature of the end segments 100. The large radius of curvature of the end segments 94 of continuous wall 90 of short windows 86 provides structural integrity and strength to the cage 26.

The cage 26 is generally ring-shaped having a circumferentially extending inner face 102 that faces radially inward and an opposite outer face 104 facing radially outward. The continuous walls 90, 96 span laterally between and form contiguously into the inner and outer faces 102, 104. The inner and outer faces 102, 104 preferably have respective spherical radiuses 106, 108 that both originate from a common center point 110 that lies on the axis 27 (as best shown in Figure 11). The inner face 102 thus has a concave profile and the outer face 104 has a convex profile when a cross section is taken along an imaginary plane that co-extends with the axis 27.

The inner face 102 of the cage 26 spans laterally (i.e. axially with respect to axis 27) between forward and rearward rims 112, 114 having substantially equal diameters 116 (see Figures 4 and 11). To achieve the retaining feature of the joint 20, the diameter 116 of the rims 112, 114 is less than the diameter 52 of the apex portion 48 of the outer surface 44 of the inner race 22. To enable the telescoping movement generally along axes 24, 27, 30 the minimum diameter 42 of the inner race 22 is substantially less than the rim diameter 116 of the cage 26.

Referring to Figures 4-6 and during operation, the joint 20 can assume various states and positions. For instance, Figure 4 illustrates the joint 20 in an axial co-extending or linear state 118 and a telescopically retracted position 120. Figure 5 illustrates the joint 20 in a telescopically extended position 122, and Figure 6 illustrates the joint 20 in both the telescopically extended position 122 and in an angled state 124. When the joint 20 is in the linear state 118 all three axes 24, 27, 30 co-extend to one-another, and thus do not intersect. When the joint 20 is in both the linear state 118 and the retracted position 120, the inner race 22, the cage 26 and the outer race 28 are concentric to one-another and thus centralized to the center point 110 of the cage 26.

As best shown in Figures 4 and 5 and when the joint is in the retracted position 120 and linear state 118, the outer surface 44 of the inner race 22 and the inner face 102 of the cage 26 radially define a circumferentially continuous cavity 125 having an annular forward opening 126 and an annular rearward opening 128. The radial thickness of the cavity 125 is substantially equal to the difference between the spherical radius 106 of the cage 26 and generally half the diameter 52 of the apex portion 48 of the outer surface 44 of the inner race 22. More specifically, the forward and rearward portions 46, 50 of outward surface 44 are generally spherical each having a spherical radius 130 that are axially offset from center point 110 by a distance 132. Distance 132 is substantially equal to the axial span of substantially cylindrical apex portion 48 and/or half the axial telescoping distance of the joint 20. The spherical radius 106 of the cage 26 is about equal to spherical radius 130 and the offset contributes toward creation or radial span of cavity 125.

For purposes of illustration and operational explanation of the joint 20, the cage 26 as illustrated in Figures 4-6 will be held stationary (i.e. stationary point of reference with axis 27 being horizontal) and the races 22, 28 will move relative to the cage 26. When the joint 20 moves from the retracted position 120 to the extended position 122, the outer race 28 moves in the rearward direction 34 by the same distance 132 that the inner race 22 moves in the forward direction 32 (and in reference to an imaginary plane 133 disposed perpendicular to axis 27 and crossing through center point 110 of the cage 26). When fully in the telescoped or extended position 122, the forward opening 126 of the cavity 125 is substantially closed because the forward portion 46 of the outer surface 44 is generally in contact with the forward rim 112 of the cage 26. Because of the symmetry of the joint 20, this telescoping motion may also be reversed with the inner race moving rearward with respect to plane 133 and with the outer race 28 moving forward by a substantially equal distance.

As best illustrated in Figure 6, the joint 20 can be both angled and telescoped at the same time. When in the angled state 124 (and regardless of whether the joint 20 is telescoped), the axis 27 of the inner race 22 and the axis 30 of the outer race 28 will intersect axis 27 of the cage 26 at the center point 110 of the cage. Moreover and when angled, the axis 24 of the inner race 22 is angled with respect to axis 27 of the cage 26 by a negative angular displacement represented by arrow 134 and the axis 30 of the outer race 28 is angled with respect to axis 27 by a positive angular displacement represented by arrow 136. The absolute magnitude of angular displacements 134, 136 are about or preferably equal to one another. When the joint 20 is partially or fully telescoped, the intersection of all three axes 24, 27, 30 is preferably not the center points of the inner and outer races 22, 28, but only of the cage 26.

For instance, the outer race 28 may be self-retained to the cage 26 instead of the inner race 22 and in a similar manner.

## Claims

1. A self-retained constant velocity joint comprising:
an inner race (22) orientated concentrically to a rotational first axis (24) with said inner race (22) having a circumferentially extending outer surface (44) facing radially outward and a plurality of grooves (54) longitudinally extending at least partially axially and communicating through said outer surface (44) with each one of said plurality of grooves (54) being spaced circumferentially from a next adjacent one of said plurality of grooves (54);
said outer surface (44) having an apex portion (48) and a forward portion (46) both disposed concentrically to said first axis (24) with said forward portion (46) diverging radially outward as said forward portion (46) spans laterally in an axially rearward direction and forms contiguous with said apex portion (48);
a plurality of balls (29) individually disposed in and movable along said plurality of grooves (54);
a cage (26) continuously extending circumferentially about said inner race (22) with said cage (26) having a circumferentially continuous forward rim (112), a circumferentially extending inner face facing (102) radially inward and at least in-part axially rearward and converging radially inward as said inner surface (102) spans laterally in an axially forward direction and forms contiguously into said forward rim (112), and a plurality of windows (86, 88) with each one of said plurality of balls (29) extending through a respective one of said plurality of windows (86, 88); and
said forward rim (112) having a diameter (116) that is less than a diameter (52) of said apex portion,
wherein said outer surface (44) has a rearward portion (50) facing in-part axially rearward and converging radially inward as said rearward portion (50) spans laterally in said axial rearward direction from said apex portion (48),
wherein the forward and rearward portions (46, 50) are spherical each having a spherical radius (130) that are axially offset from the center point (110) of the inner race (22) by a distance (132), wherein the spherical radius (106) of the cage (26) is equal to the spherical radius (130) of the forward and rearward portions (46, 50),
**characterized in that**
the apex portion (48) is cylindrical and **in that** the distance (132) is equal to the axial span of the cylindrical apex portion (48).

2. The self-retained constant velocity joint set forth in claim 1 further comprising said cage (26) having a circumferentially continuous rearward rim (114) wherein said inner face (102) diverges radially outward as said inner face (102) spans laterally in an axial forward direction and contiguously from said rearward rim (114).

3. The self-retained constant velocity joint set forth in claim 2 wherein said rearward rim (114) has a diameter (116) that is less than said diameter (52) of said apex portion (48).

4. The self-retained constant velocity joint set forth in claim 3 wherein said outer surface (44) has a convex profile.

5. The self-retained constant velocity joint set forth in claim 4 wherein said inner face (102) has a concave profile.

6. The self-retained constant velocity joint set forth in claim 1 wherein said plurality of grooves (54) have a plurality of longitudinal grooves (56) disposed parallel to said first axis (24) and a plurality of angled grooves (58, 60) that spiral with respect to said first axis (24).

7. The self-retained constant velocity joint set forth in claim 6 wherein each one of the plurality of longitudinal grooves (56) is disposed circumferentially adjacent to a respective one of the plurality of angled grooves (58, 60).

8. The self-retained constant velocity joint set forth in claim 7 further comprising:
said plurality of angled grooves having a plurality of clockwise grooves (58) and a plurality of counter-clockwise grooves (60); and
each respective one of the plurality of longitudinal grooves (56) being located circumferentially between a clockwise groove of said plurality of clockwise grooves (58) and a counter-clockwise groove of said plurality of counter-clockwise grooves (60).

9. The self-retained constant velocity joint set forth in claim 5 wherein said plurality of grooves (54) have a plurality of longitudinal grooves (56) disposed parallel to said first axis (24) and a plurality of helical grooves (58, 60) that spiral with respect to said first axis (24).

10. The self-retained constant velocity joint set forth in claim 9 wherein each one of said plurality of longitudinal grooves (56) is disposed circumferentially adjacent to a respective one of said plurality of helical grooves (58, 60).

11. The self-retained constant velocity joint set forth in claim 10 further comprising:
said plurality of helical grooves having a plurality of clockwise grooves (58) and a plurality of counter-clockwise grooves (60); and
each respective one of said plurality of longitudinal grooves (56) being located circumferentially between a clockwise groove (58) of said plurality of clockwise grooves and a counter-clockwise groove (60) of said plurality of counter-clockwise grooves.

12. The self-retained constant velocity joint set forth in claim 1 further comprising an outer race (28) spaced radially outward from said cage (26) for rotation about a second axis (27), said outer race (28) having an inner surface (70) facing radially inward with respect to said second axis (27), and a plurality of channels (72) extending at least partially axially and communicating through said inner surface (70), wherein each one of said plurality of channels (72) is spaced circumferentially from a next adjacent one of said plurality of channels (72) for receipt of a respective one of said plurality of balls (29).

13. The self-retained constant velocity joint set forth in claim 12 wherein said plurality of channels (72) have a plurality of longitudinal channels (74) disposed parallel to said second axis (27) and with each one of said plurality of longitudinal channels (74) confronting a respective one of said plurality of longitudinal grooves (56).

14. The self-retained constant velocity joint set forth in claim 13 further comprising:
said plurality of channels (72) having a plurality of clockwise channels (76) that spiral with respect to said second axis (27) and wherein each one of said plurality of clockwise channels (76) confronts a respective one of said plurality of counter-clockwise grooves (60); and
said plurality of channels (72) having a plurality of counter-clockwise channels (78) that spiral with respect to said second axis (27) and wherein each one of said plurality of counter-clockwise channels (78) confronts a respective one of said plurality of clockwise grooves (58).

## Patentansprüche

1. Selbsthaltendes Gleichlaufgelenk, mit:
einem inneren Laufring (22), der konzentrisch zu einer ersten Drehachse (24) orientiert ist, wobei der innere Laufring (22) eine in Umfangsrichtung verlaufende äußere Oberfläche (44) aufweist, die radial auswärts gewandt ist, und mehrere Rillen (54), die sich zumindest teilweise axial in Längsrichtung erstrecken und durch die äußere Oberfläche (44) in Verbindung stehen, wobei jede der mehreren Rillen (54) von einer nächsten benachbarten der mehreren Rillen (54) in Umfangsrichtung beabstandet ist;
wobei die äußere Oberfläche (44) einen Scheitelteil (48) und einen vorderen Teil (46) aufweist, die beide konzentrisch zur ersten Achse (24) angeordnet sind, wobei der vordere Teil (46) radial nach außen divergiert, während der vordere Teil (46) in einer axial rückwärtigen Richtung lateral aufspannt und sich angrenzend an den Scheitelteil (48) ausbildet;
mehreren Kugeln (29), die in den mehreren Rillen (54) einzeln angeordnet und entlang diesen beweglich sind;
einem Käfig (26), der sich um den inneren Laufring (22) fortlaufend in Umfangsrichtung erstreckt, wobei der Käfig (26) einen in Umfangsrichtung fortlaufenden vorderen Kranz (112) aufweist, eine in Umfangsrichtung verlaufende Innenfläche (102), radial einwärts und
zumindest teilweise axial rückwärts gewandt und radial einwärts konvergierend, während die innere Oberfläche (102) lateral in einer axial vorwärts gewandten Richtung aufspannt und sich angrenzend in den vorderen Kranz (112) ausbildet, und mehrere Fenster (86, 88), wobei jede der mehreren Kugeln (29) sich durch ein jeweiliges der mehreren Fenster (86, 88) erstreckt; und
wobei der vordere Kranz (112) einen Durchmesser (116) hat, der geringer als ein Durchmesser (52) des Scheitelteils ist,
wobei die äußere Oberfläche (44) einen rückwärtigen Teil (50) aufweist, der teilweise axial rückwärts gewandt ist und radial einwärts konvergiert, während der rückwärtige Teil (50) lateral in der axialen rückwärtigen Richtung vom Scheitelteil (48) aufspannt,
wobei die vorderen und rückwärtigen Teile (46, 50) sphärisch sind,
jeder mit einem Kugelradius (130), die aus dem Mittelpunkt (110) des inneren Laufrings (22) um eine Distanz (132) axial versetzt sind,
wobei der Kugelradius (106) des Käfigs (26) gleich dem Kugelradius (130) der vorderen und rückwärtigen Teile (46, 50) ist,
**dadurch gekennzeichnet, dass**
der Scheitelteil (48) zylindrisch ist, und **dadurch**, dass die Distanz (132) gleich der axialen Spannweite des zylindrischen Scheitelteils (48) ist.

2. Selbsthaltendes Gleichlaufgelenk nach Anspruch 1, wobei ferner der Käfig (26) einen in Umfangsrichtung fortlaufenden rückwärtigen Kranz (114) aufweist, wobei die Innenfläche (102) radial auswärts divergiert, während die Innenfläche (102) lateral in einer axialen Vorwärtsrichtung und von dem rückwärtigen Kranz (114) angrenzend aufspannt.

3. Selbsthaltendes Gleichlaufgelenk nach Anspruch 2, wobei der rückwärtige Kranz (114) einen Durchmesser (116) hat, der geringer als der Durchmesser (52) des Scheitelteils (48) ist.

4. Selbsthaltendes Gleichlaufgelenk nach Anspruch 3, wobei die äußere Oberfläche (44) ein konvexes Profil hat.

5. Selbsthaltendes Gleichlaufgelenk nach Anspruch 4, wobei die Innenfläche (102) ein konkaves Profil hat.

6. Selbsthaltendes Gleichlaufgelenk nach Anspruch 1, wobei die mehreren Rillen (54) mehrere Längsrillen (56) aufweisen, die parallel zu der ersten Achse (24) angeordnet sind, und mehrere gewinkelte Rillen (58, 60), die bezüglich der ersten Achse (24) spiralartig verlaufen.

7. Selbsthaltendes Gleichlaufgelenk nach Anspruch 6, wobei jede der mehreren Längsrillen (56) einer jeweiligen der mehreren gewinkelten Rillen (58, 60) in Umfangsrichtung benachbart angeordnet ist.

8. Selbsthaltendes Gleichlaufgelenk nach Anspruch 7, wobei ferner die mehreren gewinkelten Rillen mehrere Rillen (58) im Uhrzeigersinn und mehrere Rillen (60) im Gegenuhrzeigersinn aufweisen; und jede jeweilige der mehreren Längsrillen (56) in Umfangsrichtung zwischen einer Rille im Uhrzeigersinn der mehreren Rillen (58) im Uhrzeigersinn und einer Rille im Gegenuhrzeigersinn der mehreren Rillen (60) im Gegenuhrzeigersinn gelegen ist.

9. Selbsthaltendes Gleichlaufgelenk nach Anspruch 5, wobei die mehreren Rillen (54) mehrere, parallel zur ersten Achse (24) angeordnete Längsrillen (56) und mehrere helikale Rillen (58, 60) aufweisen, die bezüglich der ersten Achse (24) spiralartig verlaufen.

10. Selbsthaltendes Gleichlaufgelenk nach Anspruch 9, wobei jede der mehreren Längsrillen (56) einer jeweiligen der mehreren helikalen Rillen (58, 60) in Umfangsrichtung benachbart angeordnet ist.

11. Selbsthaltendes Gleichlaufgelenk nach Anspruch 10, wobei ferner die mehreren helikalen Rillen mehrere Rillen (58) im Uhrzeigersinn und mehrere Rillen (60) im Gegenuhrzeigersinn aufweisen; und jede jeweilige der mehreren Längsrillen (56) in Umfangsrichtung zwischen einer Rille (58) im Uhrzeigersinn der mehreren Rillen im Uhrzeigersinn und einer Rille (60) im Gegenuhrzeigersinn der mehreren Rillen im Gegenuhrzeigersinn gelegen ist.

12. Selbsthaltendes Gleichlaufgelenk nach Anspruch 1, ferner mit einem äußeren Laufring (28), der vom Käfig (26) radial auswärts beabstandet ist, für eine Drehung um eine zweite Achse (27), wobei der äußere Laufring (28) eine innere Oberfläche (70) aufweist, die bezüglich der zweiten Achse (27) radial einwärts gewandt ist, und mehrere Kanäle (72), die sich zumindest teilweise axial erstrecken und durch die innere Oberfläche (70) in Verbindung stehen, wobei jeder der mehreren Kanäle (72) von einem nächsten benachbarten der mehreren Kanäle (72) zur Aufnahme einer jeweiligen der mehreren Kugeln (29) in Umfangsrichtung beabstandet ist.

13. Selbsthaltendes Gleichlaufgelenk nach Anspruch 12, wobei die mehreren Kanäle (72) mehrere Längskanäle (74) aufweisen, die parallel zur zweiten Achse (27) angeordnet sind, und wobei jeder der mehreren Längskanäle (74) einer jeweiligen der mehreren Längsrillen (56) gegenüberliegt.

14. Selbsthaltendes Gleichlaufgelenk nach Anspruch 13, wobei ferner:
die mehreren Kanäle (72) mehrere Kanäle (76) im Uhrzeigersinn aufweisen, die bezüglich der zweiten Achse (27) spiralartig verlaufen,
und wobei jeder der mehreren Kanäle (76) im Uhrzeigersinn einer jeweiligen der mehreren Rillen (60) im Gegenuhrzeigersinn gegenüberliegt; und
die mehreren Kanäle (72) mehrere Kanäle (78) im Gegenuhrzeigersinn aufweisen, die bezüglich der zweiten Achse (27) spiralartig verlaufen, und wobei jeder der mehreren Kanäle (78) im Gegenuhrzeigersinn einer jeweiligen der mehreren Rillen (58) im Uhrzeigersinn gegenüberliegt.

## Revendications

1. Joint homocinétique auto-retenu, comprenant :
une bague intérieure (22) orientée concentriquement à un premier axe de rotation (24), ladite bague intérieure (22) ayant une surface extérieure (44) s'étendant circonférentiellement et tournée radialement vers l'extérieur, et une pluralité de gorges (54) s'étendant longitudinalement au moins partiellement axialement et communiquant via ladite surface extérieure (44) avec chacune de ladite pluralité de gorges (54) tout en étant espacées circonférentiellement vis-à-vis d'une gorge adjacente suivante de ladite pluralité de gorges (54) ;
ladite surface extérieure (44) ayant une portion de sommet (48) et une portion avant (46) disposées toutes les deux concentriquement audit premier axe (24), de sorte que ladite portion avant (46) diverge radialement vers l'extérieur lorsque ladite portion avant (46) s'étend latéralement dans une direction axialement vers l'arrière et est formée en situation contiguë avec ladite portion de sommet (48) ;
une pluralité de billes (29) disposées individuellement dans et mobiles le long de ladite pluralité de gorges (54) ;
une cage (26) s'étendant en continu circonférentiellement autour de ladite bague intérieure (22), ladite cage (26) ayant un rebord avant (112) circonférentiellement continu, une face intérieure (102) s'étendant circonférentiellement et tournée vers l'intérieur et au moins partiellement axialement vers l'arrière et convergeant radialement vers l'intérieur lorsque ladite surface intérieure (102) s'étend latéralement dans une direction axialement vers l'avant et est formée en situation contiguë vers ledit rebord avant (112), et une pluralité de fenêtres (86, 88), chacune de ladite pluralité de billes (29) s'étendant à travers une fenêtre respective de ladite pluralité de fenêtres (86, 88) ; et
ledit rebord avant (112) ayant un diamètre (116) qui est inférieur au diamètre (52) de ladite portion de sommet,
dans lequel ladite surface extérieure (44) présente une portion arrière (50) tournée partiellement axialement vers l'arrière et convergeant radialement vers l'intérieur lorsque ladite portion arrière (50) s'étend latéralement dans ladite direction axiale vers l'arrière depuis ladite portion de sommet (48),
dans lequel la portion avant et la portion arrière (46, 50) sont sphériques, chacune ayant un rayon sphérique (130) et sont axialement décalées depuis le point central (110) de la bague intérieure (22) d'une distance (132), de sorte que le rayon sphérique (106) de la cage (26) est égal au rayon sphérique (130) de la portion avant et de la portion arrière (46, 50),
**caractérisé en ce que** la portion de sommet (48) est cylindrique, et **en ce que** la distance (132) est égale à la portée axiale de la portion de sommet cylindrique (48).

2. Joint homocinétique auto-retenu selon la revendication 1, dans lequel en outre ladite cage (26) possède un rebord arrière circonférentiellement continu (114), dans lequel ladite face intérieure (102) diverge radialement vers l'extérieur lorsque ladite face intérieure (102) s'étend latéralement dans une direction axialement vers l'avant et en situation contiguë depuis ledit rebord arrière (114).

3. Joint homocinétique auto-retenu selon la revendication 2, dans lequel ledit rebord arrière (114) a un diamètre (116) qui est inférieur audit diamètre (52) de ladite portion de sommet (48).

4. Joint homocinétique auto-retenu selon la revendication 3, dans lequel ladite surface extérieure (44) a un profil convexe.

5. Joint homocinétique auto-retenu selon la revendication 4, dans lequel ladite face intérieure (102) a un profil concave.

6. Joint homocinétique auto-retenu selon la revendication 1, dans lequel ladite pluralité de gorges (54) comprend une pluralité de gorges longitudinales (56) disposées parallèlement audit premier axe (24) et une pluralité de gorges en angle (58, 60) qui décrivent une spirale par rapport audit premier axe (24).

7. Joint homocinétique auto-retenu selon la revendication 6, dans lequel chacune de la pluralité de gorges longitudinales (56) est disposée circonférentiellement adjacente à une gorge respective de la pluralité de gorges en angle (58, 60).

8. Joint homocinétique auto-retenu selon la revendication 7, comprenant en outre :
ladite pluralité de gorges en angle comprend une pluralité de gorges dans le sens des aiguilles d'une montre (58) et une pluralité de gorges dans le sens inverse aux aiguilles d'une montre (60) ; et
chaque gorge respective de la pluralité de gorges longitudinales (56) est située circonférentiellement entre une gorge dans le sens des aiguilles d'une montre parmi la pluralité de gorges dans le sens des aiguilles d'une montre (58) et une gorge dans le sens inverse aux aiguilles d'une montre parmi la pluralité de gorges dans le sens inverse aux aiguilles d'une montre (60).

9. Joint homocinétique auto-retenu selon la revendication 5, dans lequel ladite pluralité de gorges (54) comprennent une pluralité de gorges longitudinales (56) disposées parallèlement audit premier axe (24) et une pluralité de gorges hélicoïdales (58, 60) qui décrivent une spirale par rapport audit premier axe (24).

10. Joint homocinétique auto-retenu selon la revendication 9, dans lequel chaque gorge de ladite pluralité de gorges longitudinales (56) est disposée circonférentiellement adjacente à une gorge respective de ladite pluralité de gorges hélicoïdales (58, 60).

11. Joint homocinétique auto-retenu selon la revendication 10, comprenant en outre :
ladite pluralité de gorges hélicoïdales comprend une pluralité de gorges dans le sens des aiguilles d'une montre (58) et une pluralité de gorges dans le sens inverse aux aiguilles d'une montre (60) ; et
chaque gorge respective de ladite pluralité de gorges longitudinales (56) est située circonférentiellement entre une gorge dans le sens des aiguilles d'une montre (58) parmi ladite pluralité de gorges dans le sens des aiguilles d'une montre, et une gorge dans le sens inverse aux aiguilles d'une montre (60) parmi ladite pluralité de gorges dans le sens inverse aux aiguilles d'une montre.

12. Joint homocinétique auto-retenu selon la revendication 1, comprenant en outre une bague extérieure (28) espacée radialement vers l'extérieur depuis ladite cage (26) en vue d'une rotation autour d'un second axe (27), ladite bague extérieure (28) ayant une surface intérieure (70) tournée radialement vers l'intérieur par rapport audit second axe (27), et une pluralité de canaux (72) qui s'étendent au moins partiellement axialement et communiquent via ladite surface intérieure (70), de sorte que chacun de ladite pluralité de canaux (72) est espacé circonférentiellement depuis un canal suivant adjacent de ladite pluralité de canaux (72) pour recevoir une bille respective de ladite pluralité de billes (29).

13. Joint homocinétique auto-retenu selon la revendication 12, dans lequel ladite pluralité de canaux (72) comprennent une pluralité de canaux longitudinaux (74) disposés parallèlement audit second axe (27), et chacun de ladite pluralité de canaux longitudinaux (74) est en vis-à-vis d'une gorge respective de ladite pluralité de gorges longitudinales (56).

14. Joint homocinétique auto-retenu selon la revendication 13, comprenant en outre :
ladite pluralité de canaux (72) comprend une pluralité de canaux dans le sens des aiguilles d'une montre (76) qui décrivent une spirale par rapport audit second axe (27), et dans lesquels chacun de ladite pluralité de canaux dans le sens des aiguilles d'une montre (76) est en vis-à-vis d'une gorge respective de ladite pluralité de gorges dans le sens inverse aux aiguilles d'une montre (60) ; et
ladite pluralité de canaux (72) comprend une pluralité de canaux dans le sens inverse aux aiguilles d'une montre (78) qui décrivent une spirale par rapport audit second axe (27), et dans lesquels chacun de ladite pluralité de canaux dans le sens inverse aux aiguilles d'une montre (78) est en vis-à-vis d'une gorge respective de ladite pluralité de gorges dans le sens des aiguilles d'une montre (58).
